# EUROPÄISCHE PATENTANMELDUNG

(11) **EP 2 481 969 A1**
(43) Veröffentlichungstag der Anmeldung: **01.08.2012**
(21) Anmeldenummer: 11009928.0
(22) Anmeldetag: 16.12.2011
(51) Int. Cl.: F17C 5/02, F17C 9/00

(54) **Mobile Druckgas-Abgabevorrichtung**

(30) Priorität: 27.01.2011 DE 102011009581
(71) Anmelder: Linde Aktiengesellschaft, 80331 München (DE)
(72) Erfinder: Adler, Robert, 2201 Gerasdorf (AT); Rasch, Markus, 2392 Sulz im Wienerwald (AT); Siebert, Georg, 1070 Wien (AT); Stephan, Markus, 2392 Dornbach (AT)
(74) Vertreter: Zahn, Christoph

(57) **Zusammenfassung**

Es wird eine mobile, mittels eines Fahrzeuges transportierte Druckgas-Abgabevorrichtung, insbesondere eine mobile Wasserstoff-Tankstelle, beschrieben, umfassend
- eine Antriebseinheit, die dem Antrieb des die Druckgas-Abgabevorrichtung transportierenden Fahrzeuges dient,
- wenigstens einen für die Speicherung eines komprimierten Mediums geeigneten Speicherbehälter,
- wenigstens eine Leitung, über die der bzw. die Speicherbehälter mit einem von der Druckgas-Abgabevorrichtung zu befüllenden externen Speicherbehälter verbindbar sind und
- wenigstens einen Verdichter.

Erfindungsgemäß steht der oder wenigstens einer der Verdichter mit der Antriebseinheit des Fahrzeuges derart in Wirkverbindung, dass er von dieser angetrieben werden kann.

## Beschreibung

Die Erfindung betrifft eine mobile, mittels eines Fahrzeuges transportierte Druckgas-Abgabevorrichtung, insbesondere mobile Wasserstoff-Tankstelle, umfassend
- eine Antriebseinheit, die dem Antrieb des die Druckgas-Abgabevorrichtung transportierenden Fahrzeuges dient,
- wenigstens einen für die Speicherung eines komprimierten Mediums geeigneten Speicherbehälter,
- wenigstens eine Leitung, über die der bzw. die Speicherbehälter mit einem von der Druckgas-Abgabevorrichtung zu befüllenden externen Speicherbehälter verbindbar sind und
- wenigstens einen Verdichter.

Unter dem Begriff "Fahrzeug" seien nachfolgend alle Arten bzw. Typen von Land-, Luft- und Wasser-Fahrzeugen, mittels derer eine Druckgas-Abgabevorrichtung transportiert werden kann, zu verstehen.

Seit einiger Zeit sind erste Flottenversuche mit Wasserstoff-betriebenen Pkws in Gange. Die Betankung dieser Pkws erfolgt hierbei entweder an stationären Wasserstoff-Tankstellen - deren Anzahl ist bisher jedoch überschaubar - sowie mittels mobiler Wasserstoff-Tankstellen. Diese mobilen Wasserstoff-Tankstellen werden gegenwärtig mittels Lkws zu ihren Verwendungs- bzw. Aufstellungsorten transportiert. Derartige mobile Wasserstoff-Tankstellen weisen üblicherweise einen oder mehrere Wasserstoff-Speicherbehälter, einen Verdichter, ein Leitungs- bzw. Kupplungssystem, mit dem sie mit einem zu befüllenden Pkw verbunden werden können, sowie einen Verdichter, der der Verdichtung des in den zu befüllenden Pkw geförderten Wasserstoffes dient, auf.

Üblicherweise wird eine derartige Wasserstoff-Tankstelle an ihrem Aufstellungsort mit der zur Verfügung stehenden Infrastruktur (Stromnetz, Wasserleitungsnetz, etc.) verbunden. Alternativ hierzu kann die mobile Wasserstoff-Tankstelle bzw. das sie transportierende Fahrzeug zusätzlich wenigstens einen Generator aufweisen, der den für den Betrieb der Druckgas-Abgabevorrichtung bzw. Wasserstoff-Tankstelle erforderlichen Strom erzeugt. Diese Variante benötigt im Prinzip keine externe Infrastruktur. Sie erfordert jedoch einen größeren Platzbedarf und damit u. U. ein größeres Transportfahrzeug. Bei dieser Variante ist zudem die Trennung zwischen dem Generator bzw. Versorgungssystem und dem sog. Ex-Bereich nur möglich, wenn ein ausreichend Abstand zwischen den einzelnen Bauteilen (Fahrzeuggröße!) oder eine gasdichte Abschottung (Mehrgewicht!) realisiert werden (können).

Prinzipiell realisierbar ist auch ein sog. Hochdruckspeichersystem, bei dem der Wasserstoff in dem bzw. den Speicherbehältern unter einem vergleichsweise hohen Druck gespeichert wird und deshalb zum Befüllen eines zu betankenden Pkws kein Verdichter erforderlich ist. Diese Variante hat jedoch den Nachteil, dass die Speicherbehälter nur an geeigneten Standorten nachgefüllt werden können. Des Weiteren sind der bzw. die Speicherbehälter nach mehreren Betankungsvorgängen entladen und können folglich nurmehr bis zum jeweils aktuellen Speicherdruck Wasserstoff in den zu befüllenden Speicherbehälter bzw. den zu betankenden Pkw abgeben.

Aufgabe der vorliegenden Erfindung ist es, eine gattungsgemäße Druckgas-Abgabevorrichtung, insbesondere eine mobile Wasserstoff-Tankstelle, die für die Abgabe von komprimiertem Wasserstoff geeignet ist, anzugeben, die die vorgenannten Nachteile vermeidet und insbesondere auf eine externe Infrastruktur verzichten kann.

Zur Lösung dieser Aufgabe wird eine gattungsgemäße Druckgas-Abgabevorrichtung vorgeschlagen, die dadurch gekennzeichnet ist, dass der oder wenigstens einer der Verdichter mit der Antriebseinheit des Fahrzeuges derart in Wirkverbindung stehen, dass er von dieser angetrieben werden kann.

Weitere vorteilhafte Ausgestaltungen der erfindungsgemäßen mobilen Druckgas-Abgabevorrichtung, die Gegenstände der abhängigen Patentansprüche darstellen, sind dadurch gekennzeichnet, dass
- sofern zusätzlich wenigstens ein Energie-verbrauchendes Hilfssystem vorgesehen ist, das oder wenigstens eines der Hilfssystems mit der Antriebseinheit des Fahrzeuges derart in Wirkverbindung steht, dass es von dieser angetrieben und/oder mit Energie versorgt werden kann,
- die Wirkverbindung zwischen Verdichter und Antriebseinheit und/oder die Wirkverbindung zwischen Verdichter und Hilfssystem in Form eines oder mehrerer Hydraulikantriebe realisiert ist,
- die Wirkverbindung zwischen Verdichter und Antriebseinheit und/oder die Wirkverbindung zwischen Verdichter und Hilfssystem in Form einer oder mehrerer Form-, Reib- und/oder Kraft-schlüssiger Verbindungen realisiert ist,
- wenigstens ein Generator vorgesehen ist und dieser mit der Antriebseinheit derart in Wirkverbindung steht, dass er von dieser angetrieben werden kann, und
- sofern das die Druckgas-Abgabevorrichtung transportierende Fahrzeug ein Kühlsystem aufweist, das Kühlsystem derart ausgebildet ist, dass es das aus der Druckgas-Abgabevorrichtung abgebende Druckgas zumindest zeitweilig kühlt.

Erfindungsgemäß wird nunmehr die Antriebseinheit des Zug- bzw. TransportFahrzeuges genutzt, den Verdichter mit Energie zu versorgen. Hierbei erfolgt die Verbindung der Antriebseinheit mit dem Verdichter vorzugsweise über ein (Hilfs)Hydrauliksystem. Dieses ist mit der Antriebseinheit verbunden und kann vom Fahrer bzw. Operator der erfindungsgemäßen Druckgas-Abgabevorrichtung zugeschaltet werden. Die Steuerung der verbundenen Systeme erfolgt vorzugsweise mittels der Fahrzeugelektronik, die entsprechend - insbesondere im Hinblick auf die erforderliche Energiemenge - angepasst ist.

Der Antrieb des Verdichters erfolgt vorzugsweise über einen Hydraulikmotor. Derartige Motoren verfügen über das notwendige Drehmoment, um den Verdichter antreiben zu können. Die Regelung des Energieverbrauchs des Verdichters kann über die zu dem Hydraulikmotor gelangende Hydraulikmenge erfolgen. Hierbei erfolgt die Regelung entweder mittels einer Schwenkpumpe am Hilfsantrieb oder anderen durchflussbezogenen Regelgrößen. Auf diese Weise wird sichergestellt, dass die Antriebseinheit die für den Betrieb des Verdichters erforderliche Energie erzeugen kann. Bei der Verwendung eines Hydrauliksystems ist zudem sichergestellt, dass die Energieversorgung von dem vorgenannten Ex-Bereich sicher getrennt ist. Die Verbindung zwischen Antriebseinheit und Verdichterantrieb erfolgt lediglich über das mit Hydrauliköl gefüllte Leitungssystem. Das zu verdichtende Medium bzw. der zu verdichtende Wasserstoff hat keine Möglichkeit, in dieses System einzudringen, da dieses unter einem ausreichend hohen Druck steht.

Gattungsgemäße Druckgas-Abgabevorrichtungen weisen je nach Auslegung zusätzliche Energie-verbrauchende Hilfssysteme, wie beispielsweise Wasserpumpen, Kühlluftventilatoren, Luftkompressoren, etc. auf. In vorteilhafter Weise werden auch derartige Hilfssysteme mit der Antriebseinheit derart verbunden, dass sie von dieser angetrieben und/oder mit Energie versorgt werden können. In vorteilhafter Weise erfolgt dieses Verbinden zwischen Antriebseinheit und Hilfssystem ebenfalls mittels eines Hydraulikantriebs.

Die Steuerung der mittels des Fahrzeuges transportierten Druckgas-Abgabevorrichtung bzw. die Bereitstellung der für die Steuerung erforderlichen Energie erfolgt ebenfalls über die Antriebseinheit des Fahrzeuges. Dazu müssen die Antriebseinheit sowie die ihr zugeordnete Lichtmaschine, die das Bordnetz des Fahrzeuges mit Strom versorgt, entsprechend dimensioniert sein.

Ergänzend oder alternativ hierzu kann ein zusätzlicher Generator vorgesehen werden, der vorzugsweise ebenfalls über einen Hydraulikantrieb mit der Antriebseinheit in Wirkverbindung steht.

Ein grundsätzliches Problem bei gattungsgemäßen mobilen Druckgas-Abgabevorrichtungen sind die wechselnden Umgebungsbedingungen, insbesondere die wechselnde Umgebungstemperatur. Des Weiteren muss der einem zu betankenden Fahrzeug zuzuführende Wasserstoff vor dem Einströmen in den Speicherbehälter des zu betankenden Fahrzeuges üblicherweise gekühlt werden. Die hierfür erforderliche Energie wird in vorteilhafter Weise von dem Kühlsystem des die Druckgas-Abgabevorrichtung transportierenden Fahrzeuges bereitgestellt. Der für die Kühlung des Druckgases bzw. Wasserstoffs erforderliche zusätzliche Wärmetauscher verteuert und verkompliziert das Kühlsystem des Fahrzeuges zwar, jedoch erübrigt sich ein extern vorzusehendes Kühlsystem, an das die Druckgas-Abgabevorrichtung ansonsten angeschlossen werden müsste.

Die erfindungsgemäße mobile Druckgas-Abgabevorrichtung weist gegenüber dem eingangs erläuterten Stand der Technik den Vorteil auf, dass sie unabhängig von der am Verwendungsort vorhandenen Infrastruktur betrieben werden kann. Sie ist daher auch nach Ankunft am Verwendungsort schneller betriebsbereit, da die bisher erforderlichen Verbindungsarbeiten zur Gänze entfallen.

## Patentansprüche

1. Mobile, mittels eines Fahrzeuges transportierte Druckgas-Abgabevorrichtung, insbesondere mobile Wasserstoff-Tankstelle, umfassend
- eine Antriebseinheit, die dem Antrieb des die Druckgas-Abgabevorrichtung transportierenden Fahrzeuges dient,
- wenigstens einen für die Speicherung eines komprimierten Mediums geeigneten Speicherbehälter,
- wenigstens eine Leitung, über die der bzw. die Speicherbehälter mit einem von der Druckgas-Abgabevorrichtung zu befüllenden externen Speicherbehälter verbindbar sind und
- wenigstens einen Verdichter,
**dadurch gekennzeichnet, dass** der oder wenigstens einer der Verdichter mit der Antriebseinheit des Fahrzeuges derart in Wirkverbindung steht, dass er von dieser angetrieben werden kann.

2. Mobile Druckgas-Abgabevorrichtung nach Anspruch 1, wobei zusätzlich wenigstens ein Energie-verbrauchendes Hilfssystem vorgesehen ist, **dadurch gekennzeichnet, dass** das oder wenigstens eines der Hilfssystems mit der Antriebseinheit derart in Wirkverbindung steht, dass es von dieser angetrieben und/oder mit Energie versorgt werden kann.

3. Mobile Druckgas-Abgabevorrichtung nach Anspruch 1 oder 2, **dadurch gekennzeichnet, dass** die Wirkverbindung zwischen Verdichter und Antriebseinheit und/oder die Wirkverbindung zwischen Verdichter und Hilfssystem in Form eines oder mehrerer Hydraulikantriebe realisiert ist.

4. Mobile Druckgas-Abgabevorrichtung nach einem der vorhergehenden Ansprüche 1 bis 3, **dadurch gekennzeichnet, dass** die Wirkverbindung zwischen Verdichter und Antriebseinheit und/oder die Wirkverbindung zwischen Verdichter und Hilfssystem in Form einer oder mehrerer Form-, Reib- und/oder Kraft-schlüssiger Verbindungen realisiert ist

5. Mobile Druckgas-Abgabevorrichtung nach einem der vorhergehenden Ansprüche 1 bis 4, **dadurch gekennzeichnet, dass** wenigstens ein Generator vorgesehen ist und dieser mit der Antriebseinheit derart in Wirkverbindung steht, dass er von dieser angetrieben werden kann.

6. Mobile Druckgas-Abgabevorrichtung nach einem der vorhergehenden Ansprüche 1 bis 5, wobei das die Druckgas-Abgabevorrichtung transportierende Fahrzeug ein Kühlsystem aufweist, **dadurch gekennzeichnet, dass** das Kühlsystem derart ausgebildet ist, dass es das aus der Druckgas-Abgabevorrichtung abgebende Druckgas zumindest zeitweilig kühlt.
